# EUROPÄISCHE PATENTANMELDUNG

(11) **EP 1 215 160 A1**
(43) Veröffentlichungstag der Anmeldung: **19.06.2002**
(21) Anmeldenummer: 01250436.1
(22) Anmeldetag: 11.12.2001
(51) Int. Cl.: B66C 7/16

(54) **Fahrwegbegrenzing für zwei relativ zueinander Verfahrbare Einheiten**

(30) Priorität: 14.12.2000 DE 10062800
(71) Anmelder: Demag Cranes & Components GmbH, 58300 Wetter (DE)
(72) Erfinder: Nerger, Klaus, 47506 Neukirchen-Vluyn (DE)
(74) Vertreter: Meissner, Peter E., Dipl.-Ing.

(57) **Zusammenfassung**

Die Erfindung betrifft eine Fahrwegbegrenzung für zwei relativ zueinander verfahrbare Einheiten, einen Schlitten und eine ein Aluminiumprofil tragende Profilführungsschiene. Um eine einfach zu montierende und konstruktiv einfach aufgebaute Fahrwegbegrenzung zu schaffen, wird vorgeschlagen, dass ein u-förmiges Stoppelement (11) mit einem Steg (13) vorgesehen ist, an dem zwei einander gegenüberliegende Schenkel (14) angeordnet sind, dass die Querschnittsinnenkontur des Stoppelements (11) zu der Querschnittsaußenkontur der zweiten Einheit (2) korrespondiert, so dass das Stoppelement (11) zur Montage auf das Führungsschienenende aufsteckbar ist, dass die beiden Schenkel (14) quer in die entsprechend ausgebildeten Führungsschienenseiten eingreifen und dass die beiden Schenkel (14) derart am Längsprofil (6) befestigt sind, dass das Stoppelement (11) bei Kraftbeaufschlagung durch den Schlitten (3) zur Sicherstellung des Verklemmens um eine in einer Querschnittsebene der zweiten Einheit (2) liegenden und festgelegten Achse verkippbar ist.

## Beschreibung

Die Erfindung betrifft eine Fahrwegbegrenzung für zwei relativ zueinander verfahrbare Einheiten gemäß dem Oberbegriff des Anspruchs 1.

Es ist allgemein bekannt, für einen auf einer Profilführungsschiene verfahrbaren Schlitten bzw. bei feststehendem Schlitten und verfahrbarer Profilführungsschiene beispielsweise am Ende der Schiene eine Wegbegrenzung anzuordnen. Eine derartige Fahrwegbegrenzung ist ein Hindernis, das dem Schlitten bzw. der Profilführungsschiene den Weg versperrt und im Falle eines Aufpralls die auftretenden Kräfte ableitet. Eine derartige Fahrwegbegrenzung wird beispielsweise fest an der Profilführungsschiene angeordnet.

Diese Art der Fahrwegbegrenzung ist insbesondere dann konstruktiv aufwendig, wenn große Aufprallkräfte auftreten können.

Weiter ist es bekannt, zwei relativ zueinander verfahrbare fahrtechnisch zusammenwirkende Fahreinheiten mit einem Schlitten und einer Profilführungsschiene in verschiedenen Anwendungen einzusetzen, wobei der Schlitten oder die Profilführungsschiene mit einer zu verfahrenden Einheit oder Vorrichtung usw. fest verbunden ist. Im Falle einer Hubachse ist an der verfahrbaren Profilführungsschiene beispielsweise ein Aluminiumprofil angeschraubt. Derartige Aluminiumprofile werden im Strangpressverfahren hergestellt und mit Längsnuten versehen, die mit geringem Montageaufwand die Befestigung verschiedenster Bauteile, Einheiten oder Vorrichtungen ermöglichen.

Die Aufgabe der Erfindung besteht darin, eine einfach zu montierende und konstruktiv einfach aufgebaute Fahrwegbegrenzung für zwei relativ zueinander verfahrbare Einheiten zu schaffen, bei der eine Einheit als Schlitten und die andere Einheit als Profilführungsschiene ausgebildet ist, wobei die Profilführungsschiene fest mit einem Längsprofil verbunden ist, das parallel zur Profilführungsschiene verläuft.

Die Lösung dieser Aufgabe ist durch die im Anspruch 1 angegebenen Merkmale gegeben. Durch die kennzeichnenden Merkmale der Unteransprüche ist die Fahrwegbegrenzung in vorteilhafter Weise weiter ausgestaltet.

Die Lösung sieht vor, dass ein u-förmiges Stoppelement mit einem Steg vorgesehen ist, an dem zwei einander gegenüberliegende Schenkel angeordnet sind,
dass die Querschnittsinnenkontur des Stoppelements zu der Querschnittsaußenkontur der zweiten Einheit korrespondiert, so dass das Stoppelement zur Montage auf das Führungsschienenende aufsteckbar ist, dass die beiden Schenkel quer in die entsprechend ausgebildeten Führungsschienenseiten eingreifen und
dass die beiden Schenkel derart am Längsprofil befestigt sind, dass das Stoppelement bei Kraftbeaufschlagung durch den Schlitten zur Sicherstellung eines Verklemmens um eine in einer Querschnittsebene der zweiten Einheit liegenden und festgelegten Achse kippbar ist. Die Fahrwegbegrenzung ist so aufgebaut, dass die Kräfte bis zum Verklemmen des Stoppelements mit der Profilführungsschiene von der Befestigung der Schenkel am Längsprofil und damit vom Längsprofil aufgenommen werden. Nach Herstellung des Kraftschlusses durch das Verklemmen werden die Kräfte nahezu allein über das Stoppelement in die Profilführungsschiene eingeleitet. Die räumlich festgelegte Kippachse sorgt dafür, dass das um einen Winkel aus der zugeordneten Querschnittsebene kippende Stoppelement (mit seinem Steg) einen intensiven Kraftschluss herstellt. Wäre die Kippachse beispielsweise quer zur Längsrichtung in Richtung Steg bewegbar, so würde das Stoppelement über die Profilführungsschiene rutschen.

Ein konstruktiv einfaches Stoppelement beseht aus einer Metallplatte, in welche die Innenkontur hineingestanzt oder mit einem Laser hineingeschnitten ist.

Bei einem im Strangpressverfahren hergestellten und zumindest auf zwei gegenüberliegenden Seiten mit Längsnuten versehenen Aluminiumprofil handelt es sich um ein kostengünstiges und mit hoher Produktivität herstellbares Längsprofil.

Ein einfaches Stoppelement ist winkelförmige ausgebildet, d. h. es besteht aus der Metallplatte und quer zur Metallplatte verlaufenden plattenförmigen Befestigungselemente für die Befestigung der beiden Schenkel am Längsprofil. Die Befestigungselemente greifen zur Festlegung der Achse (Kippachse) quer zur Längsrichtung des Längsprofils in die Längsnuten ein.

Dabei sind die Befestigungselemente im einfachsten Falle aus den Schenkeln durch Biegung um 90° gegenüber der Metallplatte gebildet.

Eine besonders stabile und einfach zu realisierende Befestigung liegt vor, wenn die Befestigungselemente an der Stirnseite des Aluminiumprofils abgestützt befestigt sind.

Die Befestigung lässt sich weiter vereinfachen, wenn die Befestigungselemente auf Höhe der Stirnseite je eine nutenförmige Ausnehmung aufweisen, in die eine gemeinsame Stirnplatte einsteckbar ist, die an der Stirnseite des Längsprofils mittels einer Schraube befestigt ist. Die Schraube wird hierbei nur in Schraubenlängsrichtung beansprucht, was eine deutlich höhere Belastung gestattet.

Ein Ausführungsbeispiel der Erfindung ist in der Zeichnung dargestellt und wird nachfolgend näher beschrieben. Es zeigen:
- Fig. 1: eine Anordnung mit einem Schlitten, der auf einer mit einem Aluminiumprofil fest verbundenen Profilführungsschiene verfahrbar ist,
- Fig. 2: die Anordnung gemäß Fig. 1 mit der Fahrwegbegrenzung vor deren Befestigung,
- Fig. 3: die Anordnung gemäß Fig. 2 mit befestigter Fahrwegbegrenzung,
- Fig. 4: einen Querschnitt durch die Anordnung gemäß Fig. 3,
- Fig. 4a: einen Ausschnitt von Fig. 4 mit mit Metallstiften versehenen Laschen,
- Fig. 5: die Anordnung gemäß Fig. 3 mit einem u-förmigen Hohlprofil und
- Fig. 6: einen Querschnitt durch die Fahrwegbegrenzung gemäß Fig. 5.

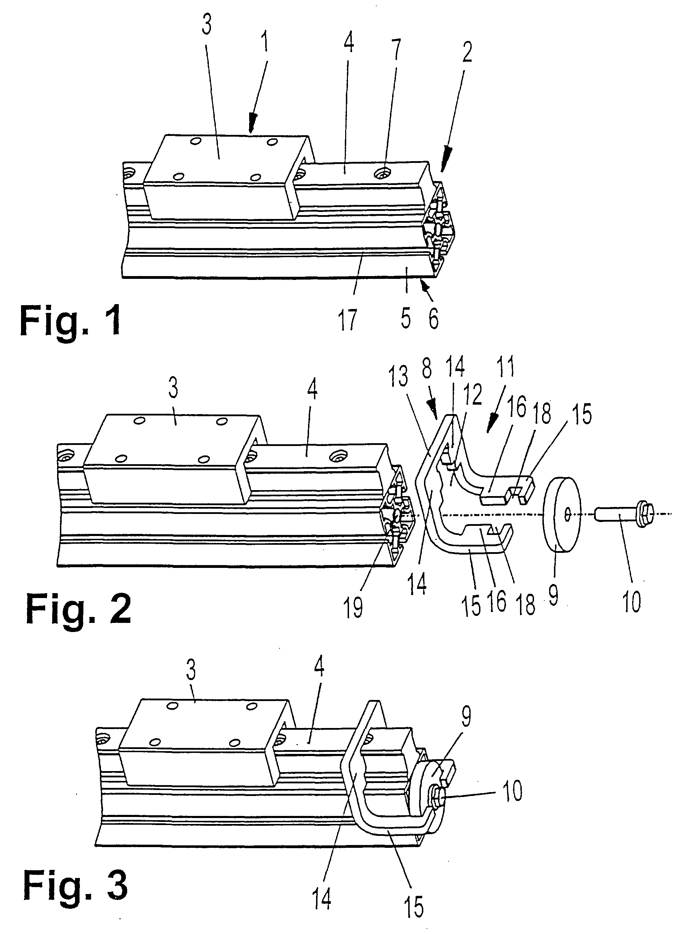

Fig.1 zeigt eine Anordnung mit zwei relativ zueinander verfahrbaren Einheiten 1, 2. Die Einheit 1 ist als Schlitten 3 ausgebildet; die Einheit 2 besteht aus einer Profilführungsschiene 4 und einem im Strangpressverfahren hergestelltem Aluminiumprofil 5 als spezielles Längsprofil 6. Wie Fig. 1 zeigt, sind die Profilführungsschiene 4 und das Aluminiumprofil 5 parallel zueinander angeordnet und mittels Schrauben 7 aneinander befestigt. Der Schlitten 3 und die Profilführungsschiene 4 wirken fahrtechnisch zusammen, wozu in dem Schlitten 3 eine Kugelumlaufführung (nicht dargestellt) ausgebildet ist. Im Ausführungsbeispiel ist es vorgesehen, den Schlitten 3 feststehend anzuordnen und die Profilführungsschiene 4 längs zu verfahren.

Fig. 2 zeigt die Fahrwegbegrenzung vor ihrer Montage. Diese besteht aus einem Winkel 8, einer kreisförmigen Metallscheibe 9 mit einer zentralen Bohrung und einer Schraube 10 zum Befestigen der Kreisscheiben 9 an der Stirnseite des Aluminiumprofils 5. Der Winkel 8 weist ein Stoppelement 11 mit einer Aussparung 12 auf, durch die sich eine U-Form ergibt. Das Stoppelement 11 besteht aus einem Steg 13 an dessen Enden zwei einander gegenüberliegende quer zum Steg 13 verlaufende Schenkel 14 angeordnet sind. Die Ausnehmung 12 weist eine Querschnittsinnenkontur auf, die zu der Querschnittsaußenkontur der Einheit 2 korrespondiert, so dass das Stoppelement 8 zur Montage auf das Führungsschienenende aufsteck- und aufschiebbar ist. Bezogen auf Fig. 2 sind am unterem Ende der Schenkel 14 Befestigungselemente 15 mit einander zugewandten Laschen 16 angeordnet. Das Stoppelement 11 mit den Befestigungselementen 15 ist aus einer einzigen Metallplatte hergestellt, wobei die Befestigungselemente 15 aus den Schenkeln 14 durch Biegung um 90° gegenüber der Metallplatte gebildet sind.

Fig. 3 zeigt die montierte Fahrwegbegrenzung. Das Stoppelement 11 sitzt gemäß Fig. 3 reiterartig auf der Profilführungsschiene 4 auf, wobei sich die Schenkel 14 bis hinunter zum Aluminiumprofil 5 erstrecken. Die Laschen 16 greifen in die Längsnuten 17 des Aluminiumprofils 5 ein. An den Enden sind die Befestigungselemente 15 mit einander gegenüberliegenden nutförmigen Ausnehmungen 18 (s. Fig. 2) versehen, in welche die Kreisscheibe 9 eingesteckt ist. Mittels der Schraube 10 ist die Kreisscheibe am Aluminiumprofil 5 festgeschraubt, das hierfür mit einer zentralen Gewindebohrung 19 versehen ist. Die Kreisscheibe 9 (Anschlagscheibe) verhindert eine Verschiebung des Stoppelements 11 in Längsrichtung der Einheit 2. Diese Konstruktion gewährleistet, dass die Schraube 10 ausschließlich in Längsrichtung belastet und nicht biegebeansprucht wird.

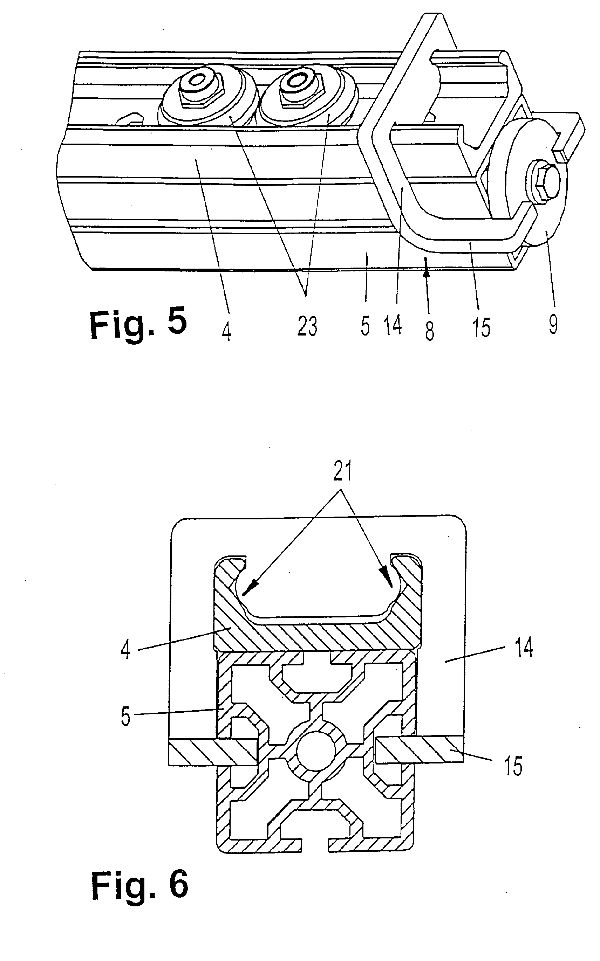

Die Führungsschiene 4 kann als sich beidseitig einschnürendes Vollprofil (s. Fig. 1-4) oder als u-förmiges Hohlprofil (s. Fig. 5 und 6) mit beidseitig an den Innenseiten der Profilschenkel vorgesehenen Längsausnehmungen ausgebildet sein.

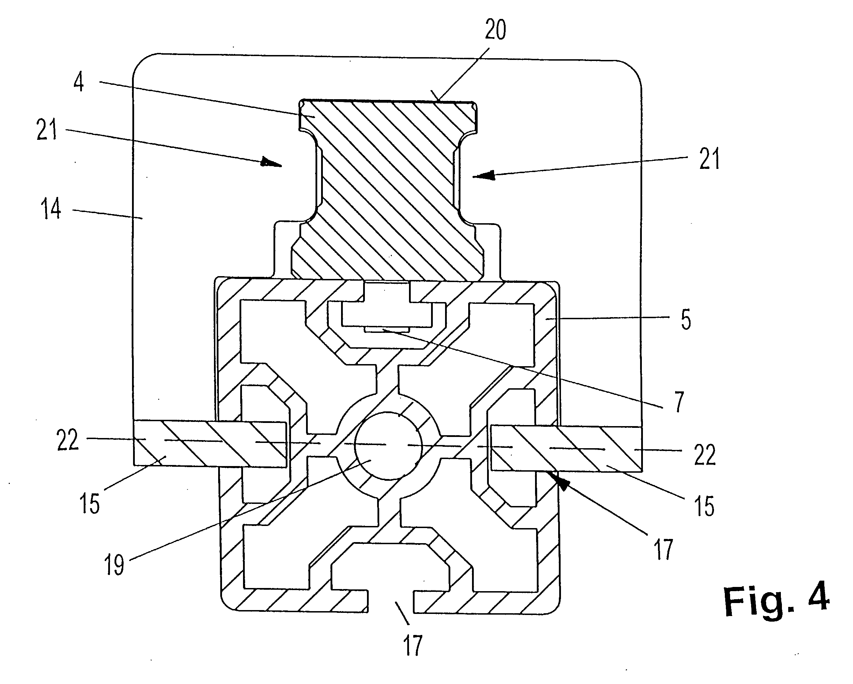

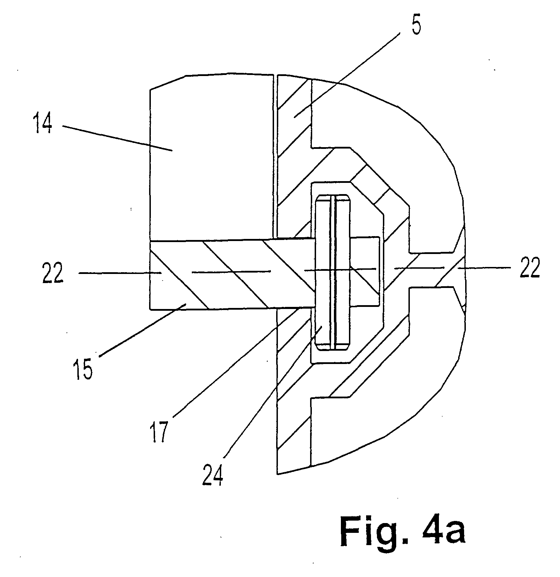

Fig. 4 zeigt einen Querschnitt durch die Profilführungsschiene 4 im Bereich der Fahrwegbegrenzung. Das aufgesteckte Stoppelement 8 liegt in Fig. 4 auf der oberen Längsseite 20 der Profilführungsschiene 4 auf. Weiter gibt es Anlagebereiche in den Einschnürungen 21 der Profilführungsschiene 4. Allerdings kann zwischen der Querschnittsinnenkontur des Stoppelements 8 und der Querschnittsaußenkontur der Einheit 2, insbesondere der Profilführungsschiene 4 auch ein geringer spaltförmiger Freiraum vorhanden sein. Ein relativ enges Umschließen der Profilführungsschiene 4 ist allerdings erwünscht. Fig. 4 zeigt die in die Längsnuten 17 eingreifenden Laschen 16. Beim Auftreten sehr großer Kräfte kann es erforderlich sein, beide Laschen 16 gegen ein Herausrutschen aus den Nuten 17 zu sichern, z.B. mittels Metallstifte 24 (s. Fig. 4a) und dergleichen. Da die beiden Schenkel 14, die quer zur Profilführungsschiene 4 Vorsprünge aufweisen, welche seitlich in die Verjüngungen 21 der Profilführungsschiene 4 eingreifen, erfolgt beim Verkippen des Stoppelements 8 eine intensive Verklemmung, d.h. ab einem vorbestimmten Kippwinkel wird ein Kraftschluss mit der Profilführungsschiene 4 hergestellt. Dabei verklemmt nur das Stoppelement 8 mit der Profilführungsschiene 4. Da die Laschen 16 der Befestigungselemente 15 gleichzeitig eine Bewegung der Kippachse (Achse 22) - bezogen auf Fig. 4 nach oben - verhindern, kann das Stoppelement 8 mit einem Aufprall des Schlittens 3 nicht auf der Profilführungsschiene 4 verrutschen, so dass ein intensiver Kraftschluss sichergestellt ist. Da die Fahrwegbegrenzung aus einem einzigen Blech hergestellt ist, kann die Achse 22 in Fig. 4 nur in etwa eingezeichnet werden.

Die Fahrwegbegrenzung ist so dimensioniert, dass noch bevor die maximal zulässige Zugkraft der Schraube 10 erreicht ist, eine Verbiegung des Winkels 8 eintritt. Der Winkel 8 wird dabei etwas zusammengebogen. Je höher die Kraft beim Aufprall ist, desto stärker wird das Stoppelement 8 gegen die Längsseite 20 (Kopffläche) der Schiene 4 gepresst. Zusätzlich verkantet sich die Kontur des Stoppelements 8 auf beiden Seiten der Profilführungsschiene 4 zwischen den Kugellaufbahnen der Profilführungsschiene 4. Damit erfolgt eine direkte Kraftübertragung vom Stoppelement 8 auf die Profilführungsschiene 4, was die Schraube 10 entlastet. Die Schraube 10 dient im wesentlichen dazu, lediglich eine so hohe Gegenkraft aufzubringen, dass der Winkel 8 verbiegt. Die durchaus gewollte Verformung der Fahrwegbegrenzung dämpft zusätzlich den Aufprall, indem sie die Energie absorbiert.

Fig. 5 zeigt die Fahrwegbegrenzung für eine Profilführungsschiene 4, die als u-förmiges Hohlprofil ausgebildet ist. Ein Querschnitt entsprechend dem in Fig. 4 ist für die Ausführung gemäß Fig. 5 in Fig. 6 dargestellt. Schematisch sind in Fig. 5 noch die beiden in der Profilführungsschiene laufenden Laufräder 23 eines zugehörigen Schlittens 1 zu erkennen.

In Zusammenschau mit Fig. 1 zeigt Fig. 4, dass der abzubremsende Schlitten 3 bei Aufprall auf das Stoppelement 8 sich oberhalb des Aluminiumprofils 5 bewegt, dass also die vom Schlitten 3 ausgeübte Kraft im wesentlichen im Bereich des Stegs 13 bzw. im oberen Bereich des Stoppelements 8, zumindest oberhalb des Aluminiumprofils 5 angreift, wobei die angreifende Kraft in Längsrichtung der Profilführungsschiene 4 gerichtet ist. Es ist klar, dass der Schlitten 3 nicht direkt gegen die Befestigungselemente 15 stoßen darf, da sonst eine Kippung des Stoppelements 8 nicht sichergestellt ist.

### Bezugszeichenliste:

- 1: Einheit
- 2: Einheit
- 3: Schlitten
- 4: Profilführungsschiene
- 5: Aluminiumprofil
- 6: Längsprofil
- 7: Schrauben
- 8: Winkel
- 9: Kreisscheiben
- 10: Schraube
- 11: Stoppelement
- 12: Aussparung
- 13: Steg
- 14: Schenkel
- 15: Befestigungselement
- 16: Lasche
- 17: Längsnut
- 18: Ausnehmung
- 19: Gewindebohrung
- 20: Längsseite
- 21: Verjüngung
- 22: Achse (Kippachse)
- 23: Laufräder
- 24: Metallstift

## Patentansprüche

1. Fahrwegbegrenzung für zwei relativ zueinander verfahrbare Einheiten, einer als Schlitten ausgebildeten ersten Einheit sowie einer zweiten Einheit, wobei die zweite Einheit aus einer mit dem Schlitten fahrtechnisch zusammenwirkenden Profilführungsschiene und einem parallel zur Profilführungsschiene angeordneten Längsprofil gebildet ist,
**dadurch gekennzeichnet,**
**dass** ein u-förmiges Stoppelement (11) mit einem Steg (13) vorgesehen ist, an dem zwei einander gegenüberliegende Schenkel (14) angeordnet sind,
**dass** die Querschnittsinnenkontur des Stoppelements (11) zu der Querschnittsaußenkontur der zweiten Einheit (2) korrespondiert, so dass das Stoppelement (11) zur Montage auf das Führungsschienenende aufsteckbar ist, dass die beiden Schenkel (14) quer in die entsprechend ausgebildeten Führungsschienenseiten eingreifen und
**dass** die beiden Schenkel (14) derart am Längsprofil (6) befestigt sind, dass das Stoppelement (11) bei Kraftbeaufschlagung durch den Schlitten (3) zur Sicherstellung des Verklemmens um eine in einer Querschnittsebene der zweiten Einheit (2) liegenden und festgelegten Achse verkippbar ist.

2. Fahrwegbegrenzung nach Anspruch 1,
**dadurch gekennzeichnet,**
**dass** das Stoppelement (11) eine Metallplatte ist, in welche die Innenkontur hineingestanzt oder mit einem Laser hineingeschnitten ist.

3. Fahrwegbegrenzung nach einem der vorhergehenden Ansprüchen,
**dadurch gekennzeichnet,**
**dass** das Längsprofil (6) ein im Strangpressverfahren hergestelltes zumindest auf zwei gegenüberliegenden Seiten mit Längsnuten (17) versehenes Aluminiumprofil (5) ist.

4. Fahrwegbegrenzung nach Anspruch 2 oder 3,
**dadurch gekennzeichnet,**
**dass** das winkelförmige Stoppelement (11) aus der Metallplatte und quer zur Metallplatte verlaufenden plattenförmigen Befestigungselementen (15) für die Befestigung der beiden Schenkel (14) gebildet ist, wobei die Befestigungselemente (15) in die Längsnuten (17) eingreifen.

5. Fahrwegbegrenzung nach Anspruch 4,
**dadurch gekennzeichnet,**
**dass** die Befestigungselemente (15) aus den Schenkeln (14) durch Biegung um 90° gegenüber der Metallplatte gebildet sind.

6. Fahrwegbegrenzung nach einem der Ansprüche 3 - 5,
**dadurch gekennzeichnet,**
**dass** die Befestigungselemente (15) an der Stirnseite des Aluminiumprofils (5) befestigt sind.

7. Fahrwegbegrenzung nach einem der Ansprüche 3 - 6,
**dadurch gekennzeichnet,**
**dass** die Befestigungselemente (15) auf Höhe der Stirnseite je eine nutenförmige Ausnehmung (18) aufweisen, in die eine gemeinsame Stirnplatte (9) einsteckbar ist, die an der Stirnseite des Aluminiumprofils (5) mittels einer Schraube (10) befestigt ist.
